# EUROPEAN PATENT SPECIFICATION

(11) **EP 0 507 299 B1**
(45) Date of publication and mention of the grant of the patent: **15.07.1998**
(21) Application number: 92105695.8
(22) Date of filing: 02.04.1992
(51) Int. Cl.: G06F 15/16, G06F 11/18

(54) **Loosely coupled multiplexing control apparatus**
Lose gekoppelte Multiplex-Steuervorrichtung
Appareil de contrôle d'un multiplexage couplé lâche

(30) Priority: 05.04.1991 JP 72774/91
(43) Date of publication of application: 07.10.1992
(73) Proprietor: HITACHI, LTD., Chiyoda-ku, Tokyo 100 (JP)
(72) Inventor: Kobayashi, Nobuhisa, Katsuta-shi (JP); Tashiro, Korefumi, Hitachi-shi (JP); Nohmi, Makoto, Kawasaki-shi (JP)
(74) Representative: Strehl Schübel-Hopf & Partner

(56) References cited:
- WO-A-87/07793
- US-A- 4 667 284
- PROCEEDINGS IECON'84 22 October 1984 , KEIO INTERNATIONAL CONTINETAL HOTEL TOKYO, JAPAN pages 1181 - 1184 K. ASAMI 'super-high reliability fault tolerant system NURECS-3000'

## Description

### BACKGROUND OF THE INVENTION

The present invention relates to a loosely coupled multiplexing control apparatus in a computer control system, which maintains independence from other computers to enhance its reliability and safety.

For the purpose of enhancing the reliability of a control device, there are general multiplexing techniques.

For example, in the case where a plurality (for example, 3) of computers are arranged to be synchronized so that collation and majority decision are carried out at all times between data on the address and data buses of the respective computers, even when one of the computers becomes faulty, the remaining two computers can continue their computing control operation by majority decision as it is, so long as comparative collation is carried out and coincidence is found between data on the internal buses of the respective computers.

When it is desired to configure a system on a multiplexing basis according to such a prior art method, there are contemplated three design considerations, that is, firstly how to synchronize these computers based on clock level, secondly how to make coincide with each other input data taken into the respective computers, and thirdly how to set the respective internal control conditions of the multiplexed computers or how to arrange a circuit for performing majority decision and collation between input and output data to provide a fail-safe function (to avoid any failure of error detection). This has been solved in a prior art method by providing such a special circuit that makes input data coincide with each other and performs collation of output data, inevitably involving a size increase in the circuit. In particular, as the number of computers to be multiplexed is increased, the circuit becomes increasingly complex. Further, for the purpose of synchronizing computers, a method for synchronizing a control clock for the respective computers has been proposed. However, this conventional method has had such a danger that a failure in the clock results in a failure in the entire system because of the use of the common clock obtained from an identical clock supply source.

In addition to the above problems, in the data collation/majority decision system based on such detailed operation, once one of the multiplexed computers becomes faulty and has to be maintenanced or repaired, it is difficult to repair the faulty computer without any influences on the other computers in operation. And even after the repair has been completed, when it is desired to restore the system, it becomes necessary to once stop the entire system for its initialization and re-start. These techniques are introduced in a magazine "NIKKEI Electronics" (Published March 1, 1982), an article titled "Design of Fault Tolerant System in Railroad Signal Control Techniques" and also in a journal (January, 1987) "Fault Tolerant Computer" of the Institute of Electronics Information and Communication Engineers of Japan.

In this way, there are the aforementioned problems in the fault detection based on the synchronization and collation of the data on the internal buses and in the selection control of normal data based on majority decision. Since a single computer has a limit in its inherent fault/error detection ability, the computer cannot be used as it is in such a system that requires a high reliability and safety.

Accordingly, for the purpose of realizing a reliable, safe computer control system, there has been demanded a multiplexing computer control system in which computers are multiplexed on a synchronizing/majority decision basis, an increase in a circuit scale can be minimized, and easy access is allowed to a faulty one of the computers for its maintenance and repair.

An example of such a multiplexing control apparatus is disclosed in US-4 667 284 from which the preamble of claim 1 starts out. Each computer controller of this apparatus carries out a majority decision on output data generated by all computer controllers. A computer controller which is assumed to function properly is selected on the basis of the results of the individual majority decisions. This technique has the disadvantage that it fails when a majority decision circuit or software fails.

### SUMMARY OF THE INVENTION

It is therefore an object of the present invention to provide a multiplexing control apparatus which is highly reliable. This object is solved by the apparatus set forth in claim 1. The subclaims are directed to preferred embodiments of the invention.

According to a preferred embodiment, the invention can be implemented without requiring a synchronisation of control clock levels of multiplexed computers and the collation of internal bus levels of control data in the computers in the unit processing between the independent computers.

The above object can be attained by performing majority decision collation and diagnosis over the processing data within the computers on a software basis for each control cycle. Furthermore, one system among the majority is selected as a control output system to a control object, and a selecting means is equipped for outputting the main system data only to the control object and cuts off sending any data to the control object when the main system becomes out of order.

In multiplexing the computers according to the present invention, the problems in the prior art can be solved by removing common hardware in the computers.

In the loosely coupled multiplexing control apparatus of the present invention, since the internal majority decision collation/diagnosis of the computers are verified by the diagnosis means of fail-safe structure on the output sides of the computers, justification of the majority decision collation can be realized.

Since the hardware commonly used among the multiplexed computers is removed, the multiplexing control apparatus as a multiplexing computer control system can be improved in reliability and a part of the system can be maintenanced without stopping the entire system.

In accordance with the present invention, data exchange between the computers can be realized without any provision of a special means commonly used to the computers for majority decision collation of output data, and the majority decision collation of input and output data within the computers can be carried out under control of programs built in the respective computers. By the structure of this invention, reliability of the system is improved. Furthermore, a fail-safe control apparatus is realized in which a main system is selected based on the result of majority decision, and a selecting means is equipped for outputting main system data only and cuts off sending any data to the control object upon malfunction of the main system. Whether or not the majority decision collation forming the important part of the multiplexing configuration is normally effected is carried out alternately with the majority decision collation of the plural computer, and the diagnosis results are monitored by the respective diagnosis means of the computers.

With such an arrangement, each of the computers to be multiplexed may comprise a general-purpose computer which is not necessarily specialized, and a reliable multiplexing computer system of low cost with high reliability and fail-safe is realized.

Further, the removal of devices to be commonly used among the computers enables improvement of its reliability and maintenance.

The plurality of computers are preferably operated synchronously to perform cyclical control of data input, control processing and data output over its control object in each control cycle, and thus the respective computers perform their data input to the control object concurrently in synchronism with the control cycle of its processing unit.

The respective computers are advantageously coupled by communication means which are provided in the computers for mutual exchange of the internal control states of the computers.

Through the communication means, the respective computers can exchange input data and perform identity operation thereover based on majority decision logic to obtain an identity data. The conversion of the input data into the identity data causes the computers to perform their control operation and generate control output data.

The control output data are also subjected to a mutual exchange between the computers to be converted into an identity data based on the majority decision logic.

Through these control cycles, one of the computers to provide a control output is determined according to preset priorities based on a logic common to the computers on the basis of the control states of the computers.

The majority decision collation of each computer, which forms the core of a preferred arrangement of the present invention, is supposed to be normally carried out in each computer. Thus, the diagnosis of the majority decision collation is carried out by synchronizing the computers, exchanging diagnosis data for the majority decision collation, and checking the positive detection of satisfaction and non-satisfaction of the majority decision collation. Diagnosis results of the majority decision collation in the computers are input to the respective diagnosis means of the computers. The diagnosis means performs fail-safe majority decision over the received diagnosis result to diagnose the state of the computer connected thereto.

The diagnosis means receives, together with the diagnosis result of the majority decision collation, a selection control result from the control output computer. The diagnosis means carries out the majority decision on control result of the majority decision collation of the plural computer, and also on selection result of the control output computer based on the majority decision collation of the plural computers. The diagnosis means control the control output circuits so that the computer which is determined above by majority decision is the computer for carrying out control output.

With this arrangement, when the self diagnosis of each computer and the mutual diagnosis including the majority decision collation allow the detection of an abnormality in the computers of the multiplexed computer system, the overall computer system can be made in a fail-safe form by making only the diagnosis means in a fail-safe form.

That is, when the self diagnosis of each general-purpose computer and the mutual diagnosis including the majority decision collation allow the detection of an abnormality in the computers of the multiplexed computer system, there can be provided a reliable, loosely coupled multiplexing control apparatus without employment of special computers to be synchronized for internal bus level collation between the computers.

### BRIEF DESCRIPTION OF THE DRAWINGS

Fig. 1 is a block diagram of an arrangement of an embodiment of the present invention;
Fig. 2 is a diagram showing an electrically isolated interconnection state between control input/output lines and computer controllers;
Fig. 3 is a detailed block diagram of a synchronous interrupt control unit;
Fig. 4 is a timing chart for explaining synchronous interrupt generation;
Fig. 5 is a flowchart of processing steps in a control cycle;
Fig. 6 is a diagram for explaining a relation between control and diagnosis phases in the control cycle in the structure of a frequency signal;
Fig. 7 is an example of frequency allocations of the frequency signal;
Fig. 8 is a detailed block diagram of an arrangement of a diagnosis unit;
Fig. 9 is a detailed block diagram of a structure of a frequency discrimination unit;
Fig. 10 is a detailed block diagram of a structure of a diagnosis circuit;
Fig. 11 is a timing chart for explaining a sequence at the time of starting a system and detecting an abnormality;
Fig. 12 is a flowchart for explaining transitions in control unit diagnosis signals for initialization control;
Fig. 13 is a timing chart for explaining non-coincidence detection timing in a system diagnosis mode;
Fig. 14 is a block diagram of a structure of an output selection circuit;
Fig. 15 is an arrangement of a control output switch circuit;
Fig. 16 shows an arrangement for monitoring a control output and for cutting off a circuit at the time of detecting an abnormality; and
Fig. 17 is a timing chart for explaining a data transmission sequence.

### DESCRIPTION OF THE PREFERRED EMBODIMENTS

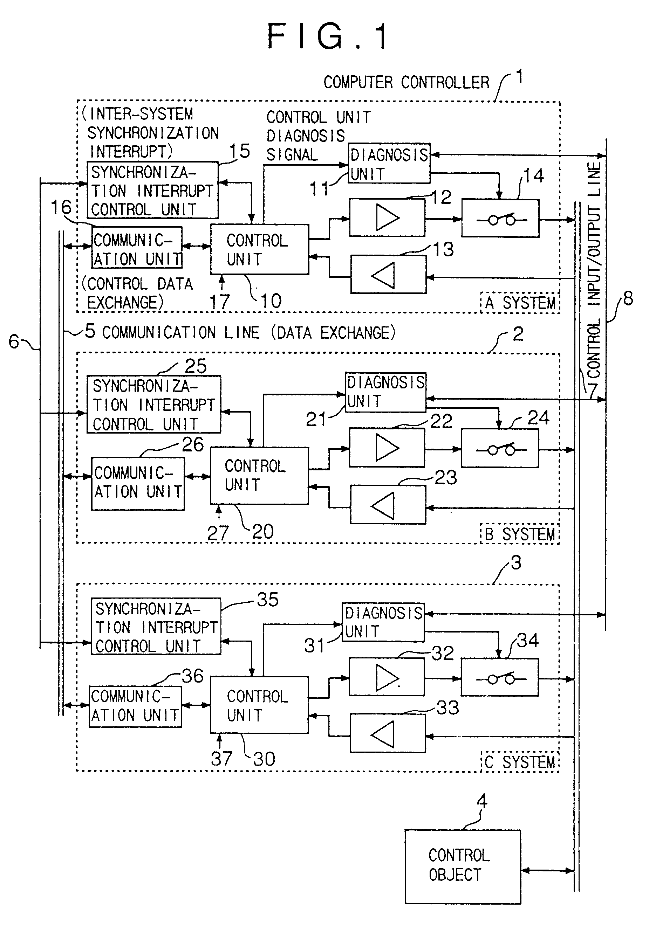

Referring first to Fig. 1, there is shown an arrangement of a roughly coupled multiplexing control apparatus which comprises three computer controllers 1, 2 and 3 in accordance with an embodiment of the present invention.

The apparatus of in Fig. 1, more specifically, further includes a control object 4 to be controlled by the computer controllers 1, 2 and 3, a communication line 5 connected between the computer controllers 1, 2 and 3 each other to data exchange, a synchronization interrupt line 6 for performing between the computer controllers, a control input/output line 7 connected between the computer controllers and the control object 4, and a controller control line 8 for controllably selecting one of the control outputs of the computer controllers.

The computer controllers 1, 2 and 3, which have the same configuration and are mutually electrically isolated from each other, are interconnected by the communication line 5, synchronization interrupt line 6, control input/output line 7 and controller control line 8. In more detail, the communication line 5 is based upon the International Standard IEEE (Institute of Electrical and Electronics Engineers) 8023 or IEEE 802.4. These lines, which comprise each a coaxial cable as a transmission medium, are coupled to the computer controllers respectively through a transformer, that is, are electrically isolated therefrom.

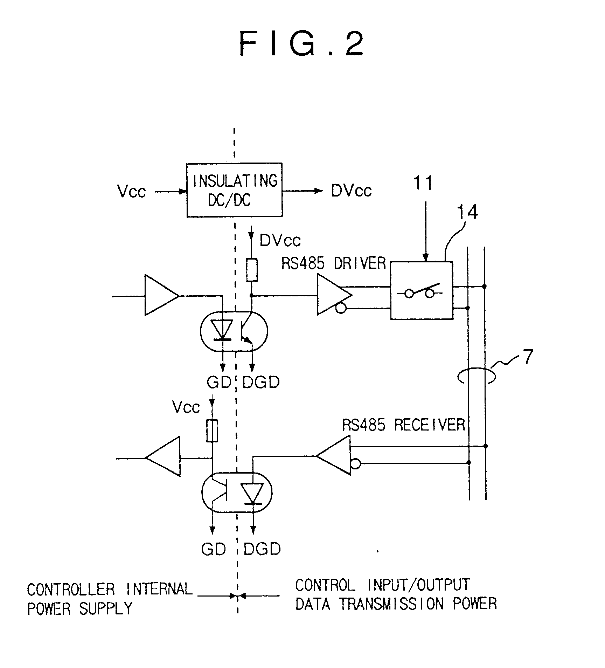

The control input/output line 7 is based on the International Standard EIARS485. As shown in Fig. 2, the control input/output line 7, which electrically separates a control input/output transmission power source from an internal power source within each computer controller, whereby the computer controllers are electrically isolated from each other.

Further, the interruption control line 6 and the controller control line 8 are based on a current drive system, and isolation between the lines 6 and 8 and the computer controllers are achieved by means of photocoupler.

Explanation will next be made as to the internal structures of the computer controllers 1, 2 and 3. Reference numerals 10, 20 and 30 denote control units which control mainly the calculating operation of the controllers; 11, 21 and 31 denote diagnosers for detecting the associated control states of the control units; 12, 22 and 32 output units of control output data; 13, 23 and 33 input units of control input data; 14, 24 and 34 control output switches; 15, 25 and 35 synchronous interruption control units for the computer controllers; 16, 26 and 36 communication units for control data exchange between the computer controllers, respectively. Further, input lines 17, 27 and 37 are used to set priority orders for the control units 10, 20 and 30 to determine the order in which the computer controllers issue control outputs to the control object 4.

In the foregoing explanation, the three computer controllers 1, 2 and 3 will be sometimes called the A system, the B system and the C system. In the illustrated embodiment, the priority is set on the aforementioned priority input lines 17, 27 and 37 in an order of the A system, the B system and the C system in such a manner that one of the systems having the highest priority based on the majority decision always cyclically controls the control object 4 through a series of processes of data input, control processing and data output.

Explanation will be made as to the operation of the triple control apparatus, in particular, the operation of the A system. The start timing of control cycle of each computer controller is started by an inter-system synchronous interrupt. Control clocks for the computer controllers are independent of each other. The inter-system synchronous interrupt is carried out under control of the synchronous interrupt control units 15, 25 and 35.

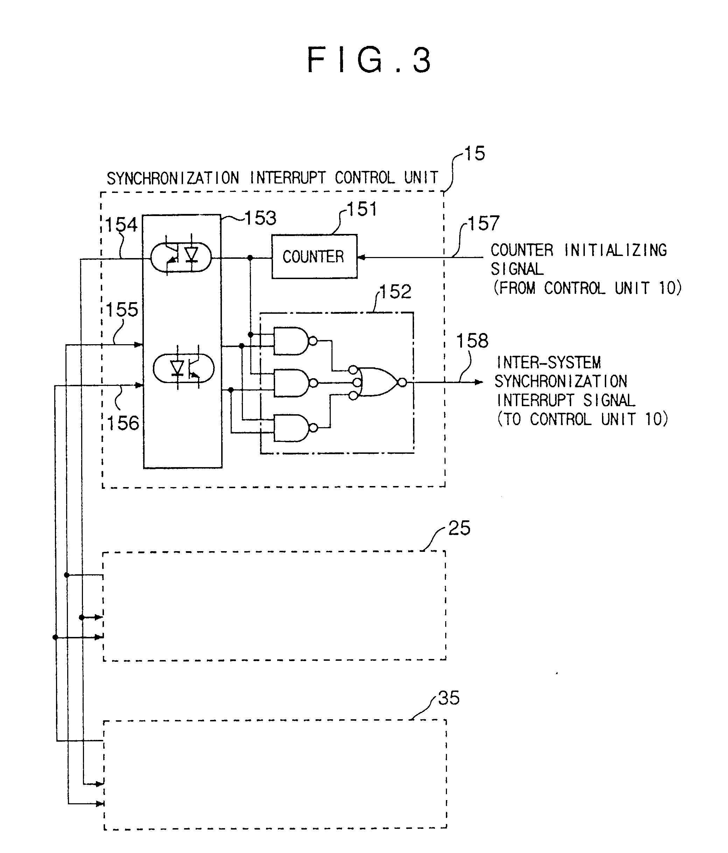

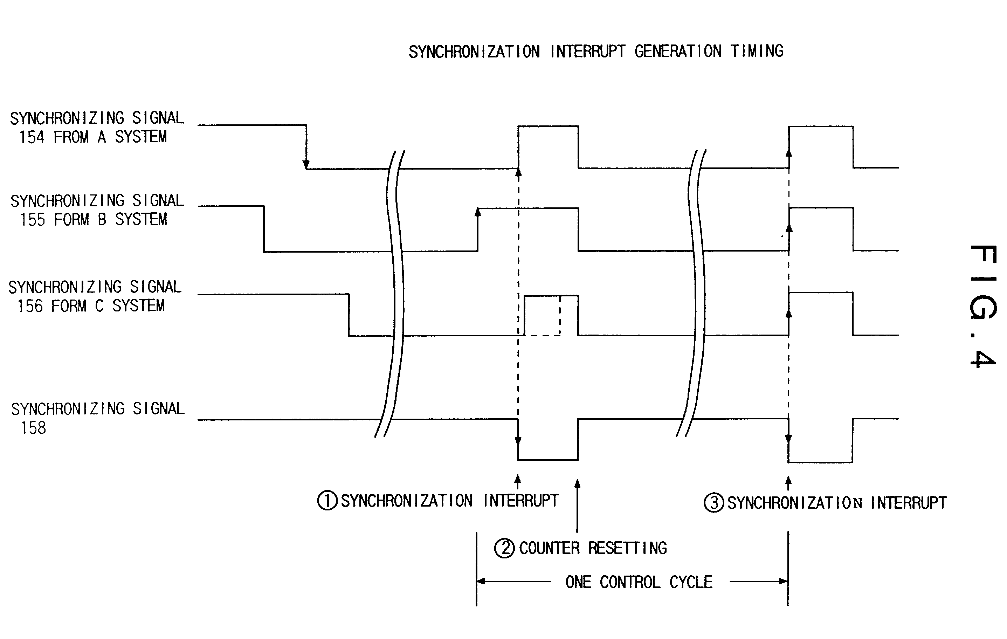

Fig. 3 shows an internal structure of one of the synchronous interrupt control units, and Fig. 4 shows its synchronous interrupt generation timing. As shown in Fig. 3, the illustrated synchronous interrupt control unit comprises a counter 151, a majority decision circuit 152 and an inter-system interface circuit 153 having photocouplers. The counter 151 receives a count start command from the control unit 10 and starts its counting operation. The counter 151, when completing its counting operation, sends a signal of logical level "1" to the majority decision circuit 152 and also externally outputs an its own system synchronizing signal 154. Similarly, the other synchronous interrupt control units 25 and 35 are operated independently of each other, that is, when finishing the counting operation of the associated internal counter, externally outputs an its own system synchronizing signal as a signal of logical level "1". When the counting of two or more of the counters of the three synchronous interrupt control units is completed, a synchronous interrupt to the associated controller is generated at such timing as shown by ① in Fig. 4. The generation of the synchronization interrupt causes the respective counters to be updated at the same time, after which the counting operation of the counters of the three synchronous interrupt control units is completed at the same time, during which the generation of the synchronous interrupt is continued.

The computer controller handles the inter-system synchronous interrupt as a trigger signal and starts its control cycle with one cycle of from ① "synchronous interrupt" to ③ "synchronous interrupt".

In the control cycle, the respective computer controllers perform control data exchange therebetween by means of the communication units 16, 26 and 36.

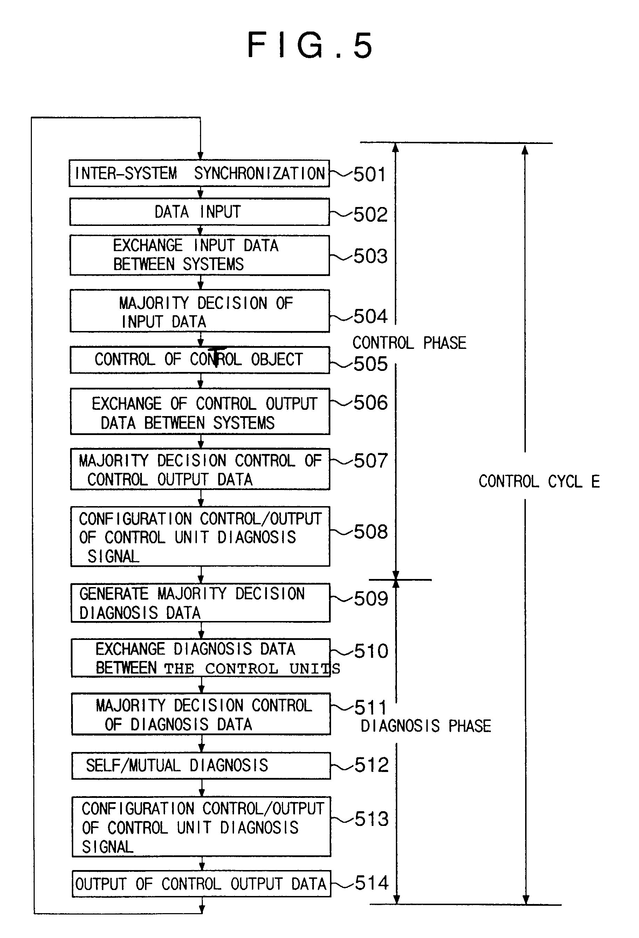

Within one control cycle, the respective computer control units 10, 20 and 30 independently parallelly execute such processing as shown in Fig. 5.

As shown in Fig. 5, during one control cycle, the aforementioned processing is divided into two phases, that is, control phase for data input and control of each control unit and diagnosis phase for majority decision diagnosis between the control units and for output of control output data from any one of the control units.

The word "control phase" as used herein refers to a phase in which the respective control units 10, 20 and 30 perform their calculating operation for control of the control object 4, whereas, the word "diagnosis phase" refers to a phase in which the control states of the three computer controllers are diagnosed.

In more detail, in the diagnosis phase, the self/mutual diagnosis of the computer controllers and the diagnosis of the inter-system data majority deciding processing on software basis are carried out.

The respective control units 10, 20 and 30 are connected to the control object 4 as follows.

That is, the respective control units 10, 20 and 30 are always connected to the control input/output line 7 through the control data input units 13, 24 and 33 disposed therebetween. Accordingly, each control unit can always input the data state on the control input/output line 7. Meanwhile, the control data output units 12, 22 and 32 are connected to the control input/output line 7 through the control output switches 14, 24 and 34.

The diagnosers 11, 21 and 31 of the control units 10, 20 and 30 decide, by majority decision, one of the control units 10, 20 and 30 to perform its control output and to controllably close associated one of the control output switches 14, 24 and 34 on the basis of the control states of the control units, whereby any one of the output units 12, 22 and 32 is connected to the control input/output line 7. How the diagnosers 11, 21 and 31 select one of the control units to perform its control output will be detailed below. A single one of the output units to be determined by majority decision to perform its control output over the control object 4 will be called the main system and the other control units will be called the sub system, hereinafter. In the control phase, the inter-system synchronous interrupt processing is carried out (step 501 in Fig. 5) and then the control units 10, 20 and 30 receive the same control status data from the control object 4 at the same time (step 502 in Fig. 5). The reception of the control status data in the control units is carried out in such a manner that the control unit as the then main system (which has the highest priority in the first control cycle or which was selected in the previous control cycle to issue the control output data) outputs an output request of the control status data to the control object and the respective control units receive the control status data from the control object.

Next, the input data received in the respective control units is exchanged among the control units through their communication units to confirm its validity (step 503) and is subjected to an identity operation based on majority decision (step 504). Control over the control object is carried out on the basis of the identity input data (step 505), the control output data is exchanged among the control units (step 506) and ascertained through majority decision processing as the control output data (step 507).

In the present embodiment, the control input/output data of the control units 10, 20 and 30 are exchanged through their communication units 16, 26 and 36 and subjected to a majority decision operation in accordance with the software built in the control units 10, 20 and 20. Accordingly, if the majority decision operation based on the software is not normally carried out, then the triple multiplexing operation becomes meaningless.

To avoid this, in the diagnosis phase, the respective control units 10, 20 and 30 are synchronized to generate and mutually exchange majority decision diagnosis data which are positively not satisfied in the triple system majority decision in accordance with the previously stored program (steps 509 and 510) and to confirm the detection ability of an abnormal data (step 511).

When the control statuses of the control units 10, 20 and 30 are normal, the control units outputs 10, 20 and 30 output a signal indicative of satisfied majority decision as a control unit diagnosis signal to the diagnoser 11 in the control phase and output a signal indicative of not satisfied majority decision in the diagnosis phase, alternately.

The control unit diagnosis signal, which contains not only the diagnosis result of the majority decision operation but also a data indicative of one of the control units (including its own control unit) selected as the main system, is supplied, to the diagnoser of the control unit.

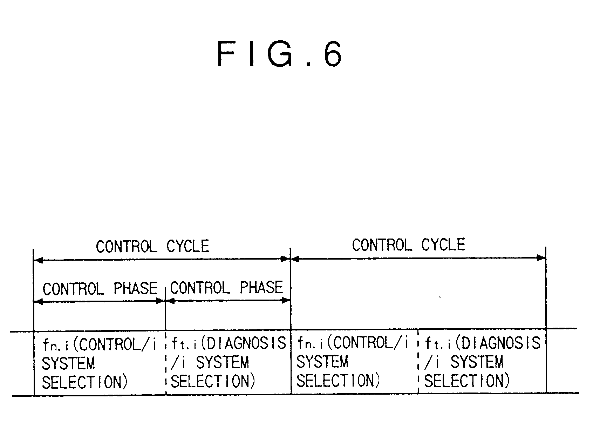

Shown in Fig. 6 is how the control unit diagnosis signal varies in the control cycle. As the control unit diagnosis signal, a frequency signal is employed for the purpose of reducing the number of interconnection signal lines between the control units 10, 20 and 30 and the diagnosers 11, 21 and 31 and also setting the internal circuit configurations of the diagnosers 11, 21 and 31 to be of a fail-safe logic. Thus, the control unit diagnosis signal is subjected to a frequency modulation when the majority decision operation is carried out and when one of the control units is selected as the main system in the control and diagnosis phases.

More specifically, in Fig. 6, reference symbol f_{n,i} denotes a frequency when the majority decision operations carried out in the control units 10, 20 and 30 are normal and the control system of the i system (i= A or B or C) is selected as the main system in the control phase; while f_{t,i} denotes a frequency when the majority decision operations are normal and the control unit of the i system (i= A or B or C) is selected as the main system in the diagnosis phase.

The diagnoser 11, 21 or 31 of the control unit 10, 20 or 30, when continuously receiving a specific-frequency-range diagnosis signal (to be described later) as satisfying the following conditions, decide its own control unit as the main system and issues a command to the associated control output switch 14, 24 or 34 to connect the output unit 12, 22 or 32 to the control input/output line 7.
(i) The self diagnosis result of the control unit is normal and the majority decision operation result is transited in the same manner in synchronism with the other control units.
(ii) The mutual diagnosis result of its own control unit by the other control units is normal and the own control unit is specified as the main system by the own control unit and at least one of the other control units.

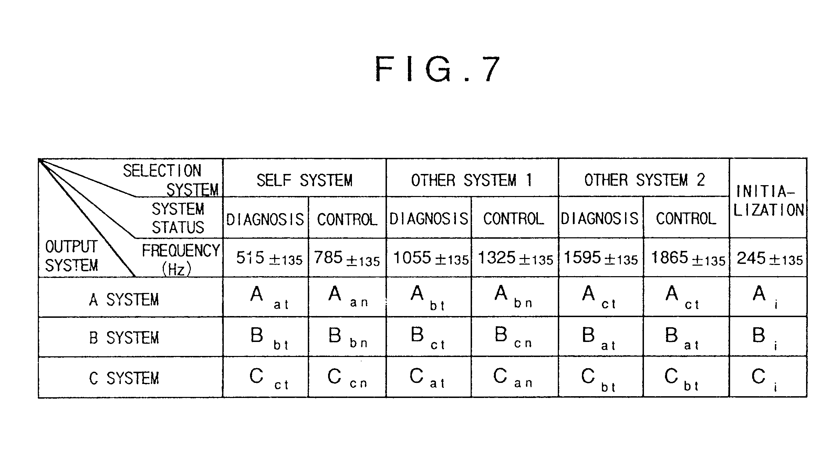

Fig. 7 is a table showing an example of frequency allocation in the control unit diagnosis signal. In the table, reference symbol Aₐₜ denotes a state in which the A system is in the diagnosis phase and its own system is selected as the main system, in which case the diagnosis signal has a frequency of 515±135Hz.

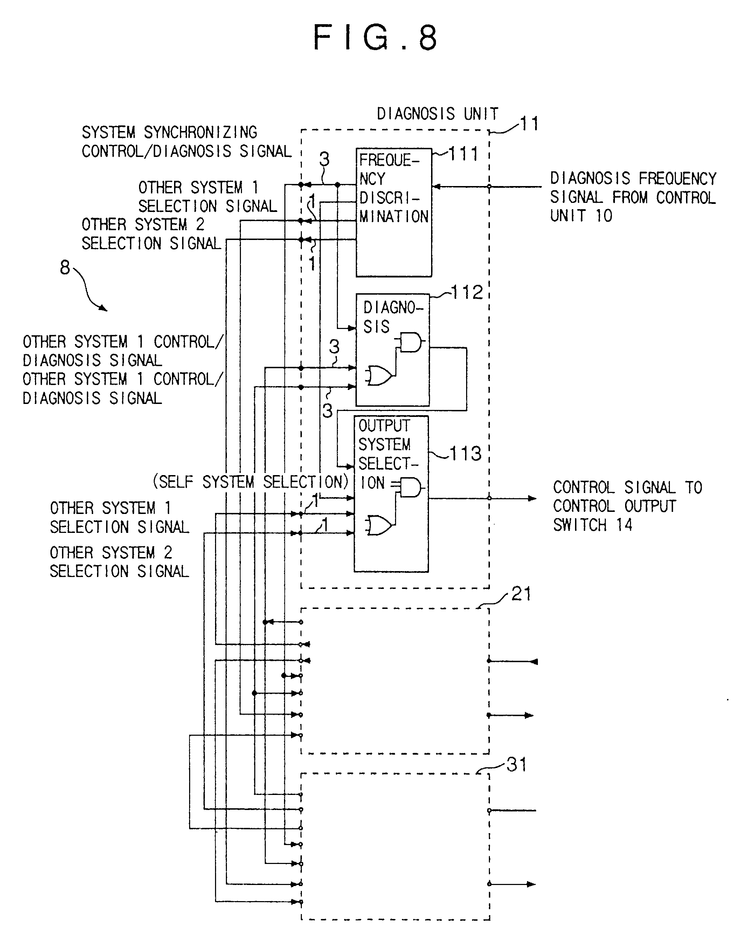

Fig. 8 shows a schematic internal structure of the diagnoser 11 connected to the control unit 10 as well as interconnections between the diagnoser 11 and the other diagnosers 21 and 22. In this case, interconnections between the diagnosers 11, 21 and 31 of the respective system are effected by means of the system control line 8. The diagnoser 11 comprises a frequency discrimination circuit 111 for receiving the diagnosis frequency signal from the control unit 10, a diagnosis circuit 112 for making a decision of a majority decision operation result, and an output system selection circuit 113 for controllably selecting the main system for control output.

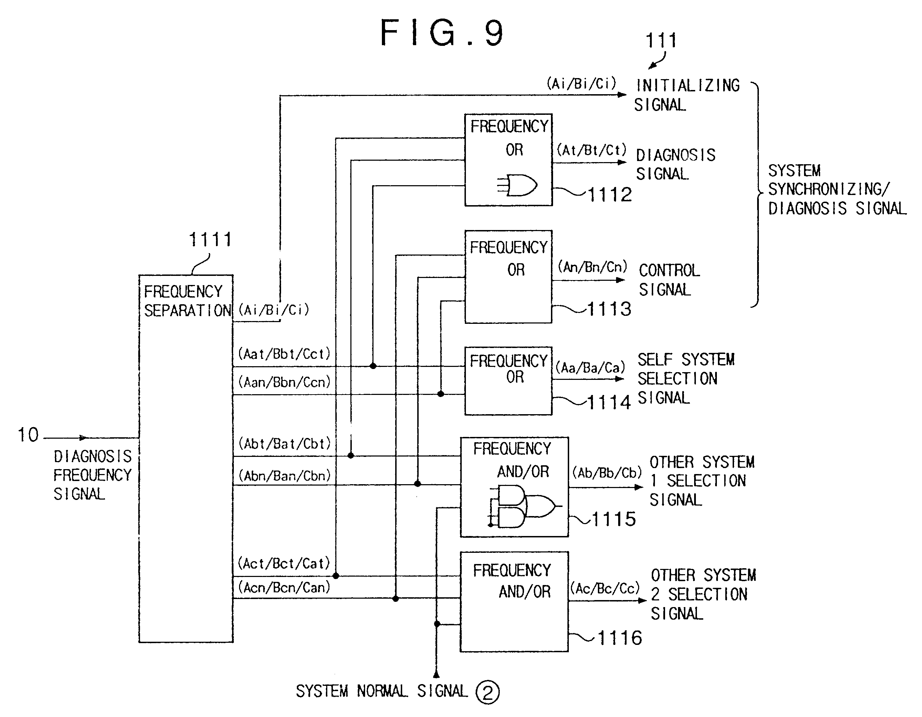

Referring to Fig. 9, there is shown a detailed structure of the frequency discriminator 111 in the diagnoser 11 showing its function. In Fig. 9, a frequency separation circuit 1111, which is a frequency logic circuit (refer to JP-A-59-28725) based on a ring operation circuit, separates the diagnosis frequency signal received from the control unit 10 for fail-safe and outputs only one of seven signals ((Ai/Bi/Ci to (Acn/Bcn/Ccn)) associated with the diagnosis frequency signal allocations of Fig. 7. The output of the frequency separation circuit 1111 is subjected to a frequency operation to generate triple system control signals. The system control signals ((Ai/Bi/Ci) to (Ac/Bc/Cc) shown at the right side of Fig. 9) as outputs of the frequency discriminator 111 has the following functions. An initialization signal (Ai, Bi, Ci) is a start control signal for initializing the triple system configuration control. A control signal (An, Bn, Cn) is a signal indicative of the control unit being in the control phase. A diagnosis signal (At, Bt, Ct) is a signal indicative of the control unit being in the diagnosis phase. A self system selection signal (Aa, Ba, Ca) is a signal indicative of the each control unit 10, 20 or 30 judging its own system (as viewed from the A system) as the main system. An other-system 1 selection signal (Ab, Bb, Cb) is a signal indicative of the control unit 10, 20 or 30 deciding one (B system in this case) of the other systems as the main system. An other-system 2 selection signal (Ac, Bc, Cc) is a signal indicative of the control unit 10, 20 or 30 deciding the remainder (C system in this case) of the other systems as the main system.

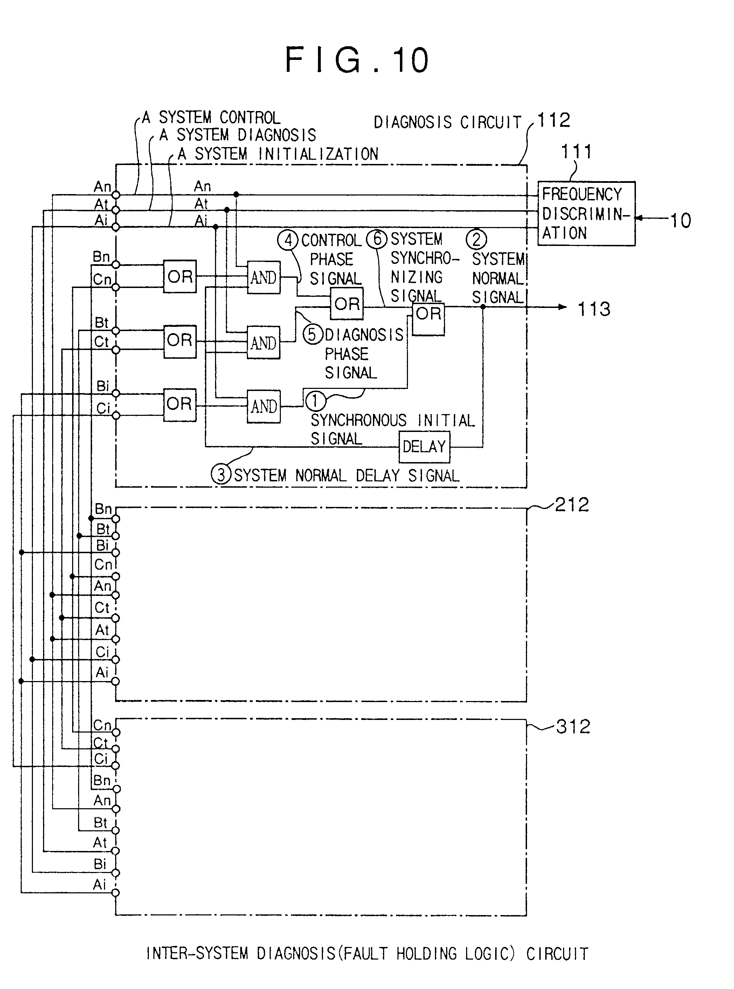

There are shown in Fig. 10 a schematic internal structure of the diagnosis circuit 112 in the diagnoser 11 as well as interconnections between the diagnosis circuit 112 and the other diagnosis circuits 212 and 312 of the other systems. The diagnosis circuit is used to confirm that the control units 10, 20 and 30 of the three systems normally perform their majority decision operation synchronously on the basis of the majority decision of the control and diagnosis signals of the systems and the continuity of its resultant frequency OR signal. The diagnosis circuit as a fault holding circuit is provided so that, when an abnormality is detected in the diagnosis of the majority decision operation, the abnormality detected control unit cannot be operated as one of the triple systems so long as the faulty control unit is not repaired and restarted.

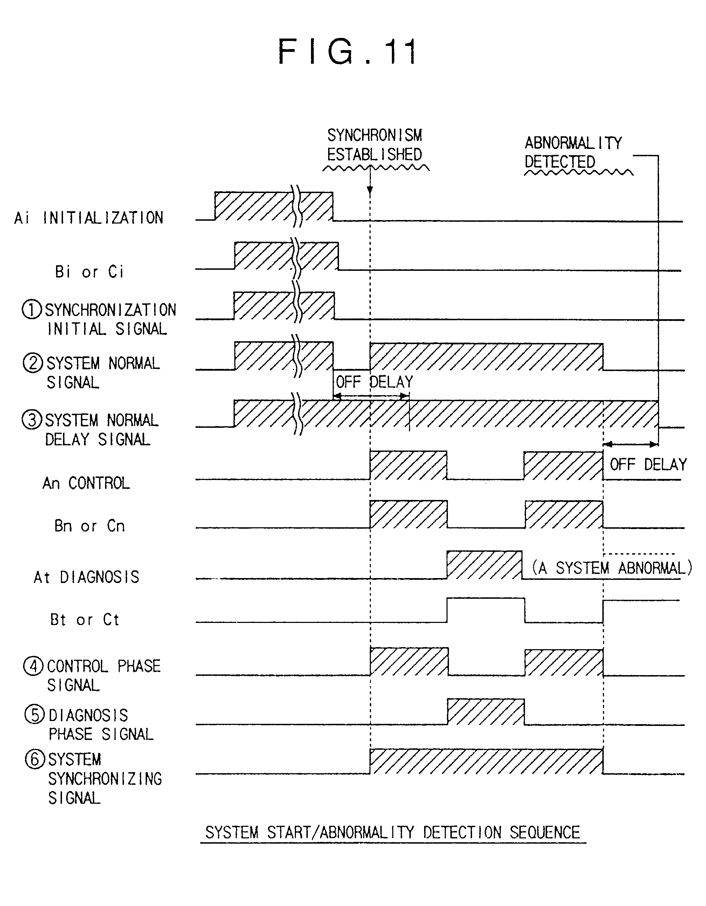

Explanation will be made as to the configuration control start of the triple systems and the fault holding by referring to Figs. 10 and 11. The fail-safe diagnosis of the triple system (A, B and C systems) and the start of the output system selection circuit are carried out by sending initialization frequency signals synchronously to the control units 10, 20 and 30 of the triple system. When the control units of the triple system send the frequency signals indicative of the diagnosis and control as control unit diagnosis signals in synchronism with the control cycle, it is judged as normal.

When the computer controllers 1, 2 and 3 are started or restoration is made to the system configuration after the repair of the abnormal computer controller 1, 2 or 3, the control units 10, 20 and 30 sends the initialization frequency signals to the diagnosers as the control unit diagnosis signals until synchronism is established, thereby setting the system configuration in the tentative normal condition.

The reception of the initialization frequency signals of the other systems to the diagnosers 11, 21 and 31 as the fail-safe circuits are designed to be effected by the frequency OR signals of the other 2 systems and so that when its own system and at least one of the other systems send the initialization frequency signals, the initialization control is started. In the initialization control, when inter-system synchronism is established under the dummy normal condition of the output of the initialization frequency signals, switching is carried out to the computer diagnosis signals corresponding to the control phases of the diagnosis and gang or interlocking process of the control cycle to enter the control condition of the interlocked system.

A switching time from the initialization frequency signal to the computer diagnosis signal for diagnosis and control corresponds to a delay in the operational time of the frequency logic.

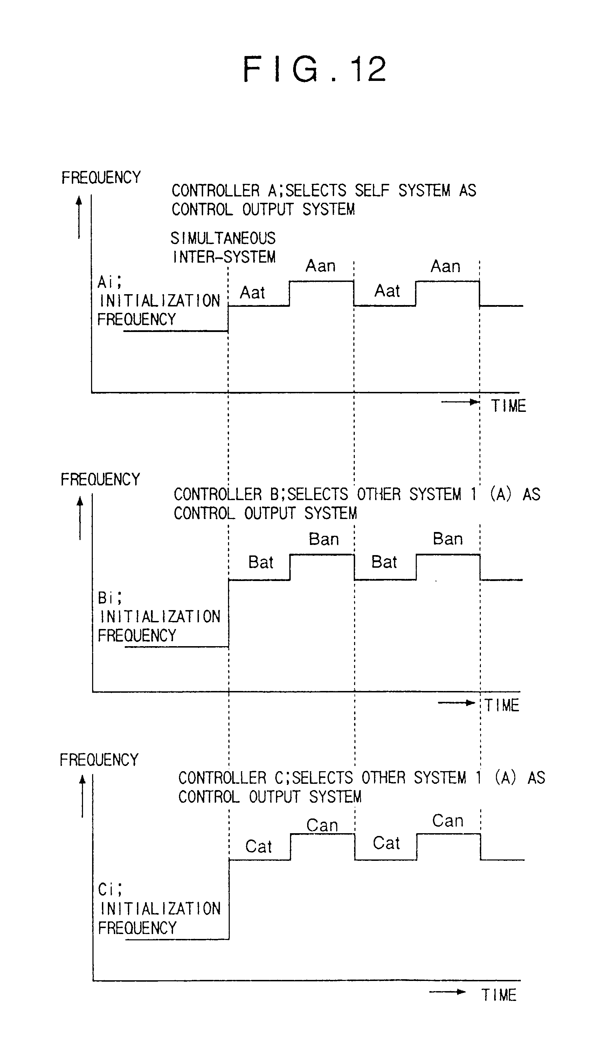

Fig. 12 shows transitions in the control unit diagnosis signals in the initialization control of the triple system.

Turning again to the diagnosis circuit 112 of Fig. 10, a ③-system normal delay signal has a function of holding the fault condition of the diagnosis circuit. When the ③-system normal delay signal changes to its frequency logic level of "0", this causes the diagnosis circuit 112 to stop its function. In starting the configuration control of the triple system, a ①-system synchronous initial signal is changed to its frequency logical level of "1" by the frequency logic majority decision of the initialization signal (Ai, Bi, Ci). This causes a ②-system normal signal and a ③-system normal delay signal to be changed to their frequency logical level of "1". In the starting of real control of the control units 10, 20 and 30 of the triple system, when the diagnosis frequency signals from the control units 10, 20 and 30 are switched to their frequencies corresponding to the control and diagnosis phases of the control cycle, the ②-system normal signal is temporarily turned OFF. However, when the off delay using frequency domain in that the frequency logic majority decision of the control signal (An, Bn, Cn) is satisfied during the presence of the remaining ③-system normal delay signal, the ②-system normal signal is restored and the ③-system normal delay signal is continuously output. Further, when the respective control units are shifted to the diagnosis phases synchronously, the ② -system normal signal is continuously output.

When the frequency logic majority decision of the control signal (An, Bn, Cn) or the diagnosis signal (At, Bt, Ct) is not satisfied and a time exceeding the off delay time of the ③-system normal delay signal elapses, the ③-system normal delay signal is changed to its frequency logic level of "0" so that the control unit 10 having the diagnosis circuit 112 cannot be returned to the triple system until it is restarted.

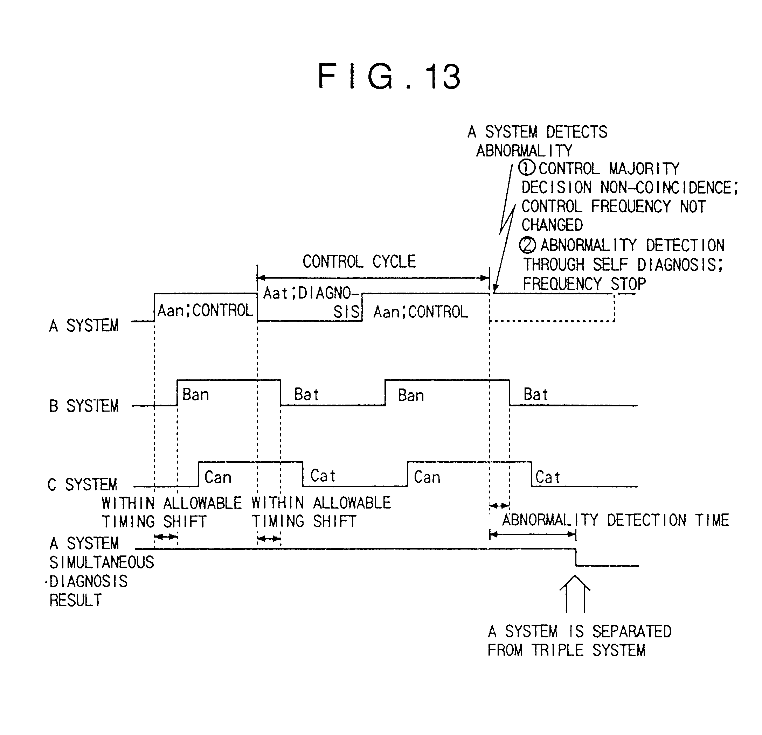

Explanation will be further made as to the aforementioned system diagnosis control with reference to Fig. 13. Each of the computers, when self diagnosis in its own computer is normal, alternately executes the majority decision for the diagnosis of majority decision control necessary for system control processing and the majority decision for the real control of interlocked logic control. On the basis of these majority decision results, each computer outputs a computer diagnosis signal having a frequency of computer diagnosis status and a frequency of interlocking process status based on time division. The system diagnosis control is used to decide whether or not the frequency signal indicative of the state of the computer varies synchronously with the other systems.

The system, which decides the majority decision to be satisfied in the majority decision for the diagnosis of the majority decision control though the all-systems majority decision should be not satisfied, or the system, which decides the majority decision to be not satisfied in the majority decision for the real control of the interlocked logic control though the majority decision should be satisfied, outputs the diagnosis signal with its frequency signal not varied. As a result, an out-of-synchronism condition takes place and thus the associated system is separated from the triple system. That is, the system is not selected as an output system and thereafter will not be a control output system. Further, the system, which detects an abnormality through its self diagnosis, stops the output of the diagnosis signal to thereby separate itself from the triple system. The system, in which an abnormality is detected through the mutual diagnosis, is specified as abnormal at the same time by the other two systems based on the majority decision for the real control of the interlocked logic control, whereby the system generates a majority decision non-coincidence to be separated from the triple system.

When the system is excluded from the triple system, the frequency logic causes the system to maintain its state as an abnormal system. Once the system is decided to be an abnormal system, it cannot be restored to the triple system so long as it does not perform its restarting operation in cooperation with the other systems.

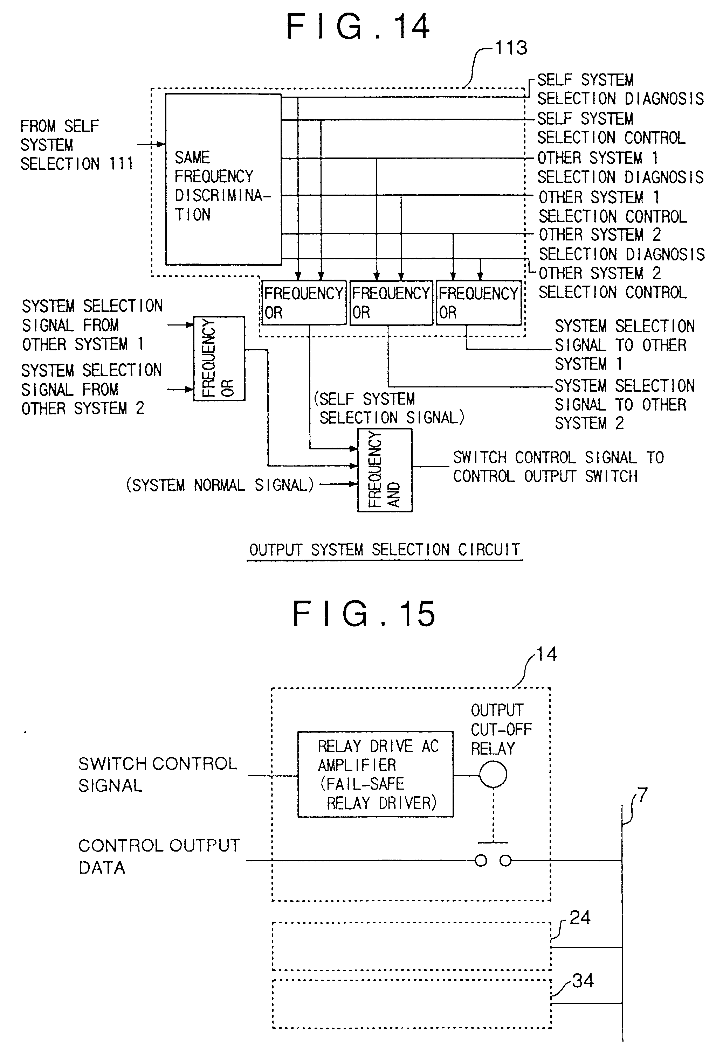

Shown in Fig. 14 is an internal logic configuration of the output system selection circuit 113. The output system selection circuit 113 comprises a majority decision circuit which preferentially selects an own-system selection signal over other system selection signals. This circuit selects the self system as the main system, that is, does not select any one or more of the other systems as the main system.

The diagnosers 11, 21 and 31 are independently provided in the respective control units 10, 20 and 30 for diagnosis and output system selection. When the frequency discrimination circuit, the diagnoser and the output system selection circuit comprise each a fail-safe circuit based on the frequency logic, double selection in the output system selection will be positively avoided as shown in Figs. 10 to 13.

Fig. 15 shows a structure of, in particular, one 14 of the control output switches 14, 24 and 34. The control output is carried out through a serial transmission line based on the Standard RS 485. The control output switch functions to connect and disconnect the control output to and from the transmission line by means of a relay. More in detail, the control output switches 14, 24 and 34 receives the frequency signals from the diagnosers 11, 21 and 31 and when the frequency logic level is "1", i.e., when one of the systems is selected as the output system, an AC amplifier in the associated control output switch drives the associated relay for fail-safe.

Next, explanation will be made as to the mutual control output monitoring of the computer controllers 1, 2 and 3 and how to cut off an abnormal circuit when an abnormality is detected therein. Each of the computers of the triple system providing the fail-safe configuration control and the interlocked system contains a serial data transmission circuit for control output, but the serial data transmission circuit based on the Standard Specifications is not a fail-safe circuit. In the interlocked system, since one system selected as the control output system performs the control output, the multiplexing of the serial data transmission circuits for the control output becomes meaningless. A failure rate in the output processing is equivalent to that when the single serial data transmission circuit becomes faulty.

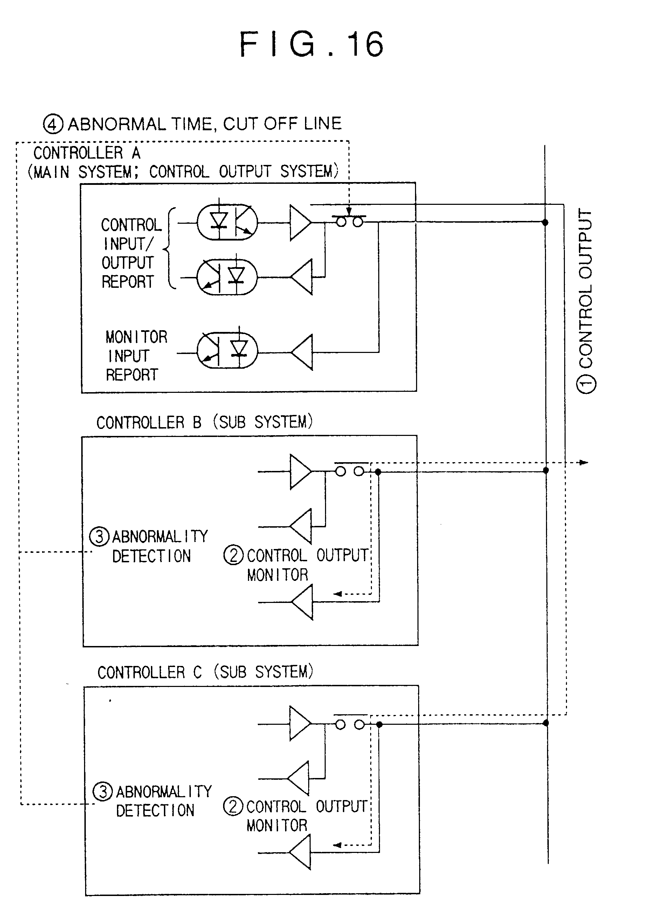

In the illustrated embodiment, fail-safe as the output processing device is realized by monitoring the control outputs of the systems other than the control output system of the multiplexed computers, by controllably separating the erroneous control output system from the signal system connection line at the time of detecting an erroneous control output in the control output systems, and by employing such a transmission control protocol that an interruption in the course of output of the control output signal results in stoppage of an erroneous control output. In other words, the computer of the control output system can monitor its control output condition and the other computers can monitor their control output conditions. When the two systems detects an abnormality in the control output, i.e., that a data other than the data decided on the majority decision of the interlocked logic control is output through the monitoring operation, the two systems, which detected the abnormality, can cooperate to disconnect the control output system from the signal system through the connection line. The monitoring of the control input and output and the disconnection of the connection line at the occurrence of an abnormality are illustrated in Fig. 16.

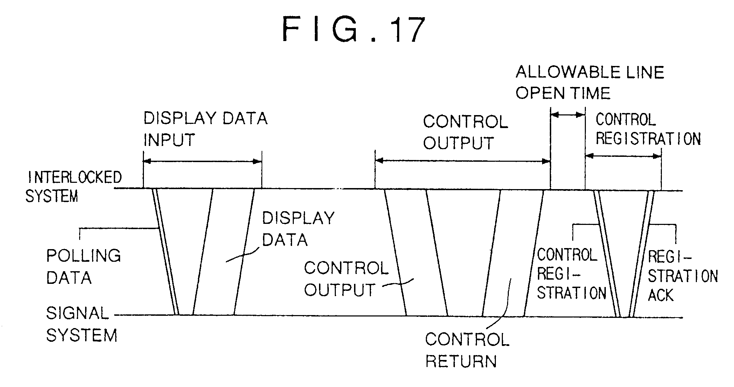

Shown in Fig.17 is a protocol for data transmission control between the interlocked and signal systems. According to this protocol, one control output is completed by:
(i) sending the control output from the interlocked system to the signal system and returning thereto the control output from the signal system; and
(ii) by sending a control registration to the signal system from the interlocked system after exchanging the control output.

That is, when the computer of the control output system provides an erroneous control output, the computers of the systems other than the control output system can detect the erroneous control output. As a result, the computers of the systems other than the control output system can set the abnormality-detected computer to be an abnormal system and prior to the output of a control registration, can cut off the connection line between the interlocked and signal systems, whereby any erroneous control output can be avoided.

## Claims

1. A loosely coupled multiplexing control apparatus including a plurality of computer controllers (1, 2, 3), each comprising:
a control unit (10, 20, 30) for generating control data for controlling an object (4), for receiving control data generated by a control unit of a different computer controller, and for conducting a majority decision on the control data, and
means (11, 21, 31, 14, 24, 34) for outputting to said object the control data of the control unit of a computer controller selected as a main system on the basis of said majority decision,
characterised in that
said control unit (10, 20, 30) is adapted to operate in a control phase and a diagnosis phase, both phases being performed in each control cycle,
in said control phase, said control unit conducts said majority decision on said control data and generates a main system select signal which reflects whether the control data generated by itself satisfy the majority decision and indicates a computer controller to be selected as a main system,
in said diagnosis phase, said control unit conducts said majority decision on data predetermined not to satisfy the majority decision and generates a main system select signal which reflects whether the majority decision is indeed not satisfied and indicates a main system to be selected, and
said means for outputting said control data include an external diagnosing apparatus (11, 21, 31) for receiving said main system select signals and conducting a majority decision on the received main system select signals and for outputting the control data of the control unit of its own computer controller to the object if the own computer controller is the main system and otherwise disconnecting the computer controller from the object.

2. An apparatus according to claim 1, wherein said control units (10, 20, 30) have pre-determined priorities assigned thereto and said means (11, 21, 31, 14, 24, 34) for outputting control data select as the main system that computer controller (1, 2, 3) which has the highest priority among the computer controllers selected by majority decision.

3. A control apparatus according to claim 1 or 2, wherein said means (11, 14, 21, 24, 31, 34) for outputting control data include switch means (14, 24, 34) for connecting or disconnecting the respective control unit (10, 20, 30) to or from said controlled object (4), said external diagnosing apparatus (11, 21, 31) closes the switch means of the computer controller (1, 2, 3) selected as said main system to supply a control output to said controlled object (4) and the control units (10, 20, 30) of all computer controllers (1, 2, 3) receive the control outputs of said means (11, 14, 21, 24, 31, 34) for outputting control data and interrupt their control when they detect an abnormality in the control output.

## Patentansprüche

1. Lose gekoppelte Multiplex-Steuervorrichtung mit mehreren Computersteuerungen (1, 2, 3), die jeweils aufweisen:
eine Steuereinheit (10, 20, 30), um Steuerdaten zur Steuerung eines Objekts (4) zu erzeugen, von einer Steuereinheit einer anderen Computersteuerung erzeugte Steuerdaten zu empfangen und anhand der Steuerdaten eine Majoritätsentscheidung durchzuführen, und
eine Einrichtung (11, 21, 31, 14, 24, 34) zur Ausgabe der Steuerdaten der Steuereinheit einer auf der Grundlage der Majoritätsentscheidung als Hauptsystem ausgewählten Computersteuerung an das Objekt,
dadurch gekennzeichnet, daß
die Steuereinheit (10, 20, 30) eingerichtet ist, in einer Steuerphase und in einer Diagnosephase zu arbeiten, wobei beide Phasen in jedem Steuerzyklus auftreten,
die Steuereinheit in der Steuerphase die Majoritätsentscheidung anhand der Steuerdaten durchführt und ein Hauptsystem-Auswahlsignal erzeugt, das darstellt, ob die von ihm selbst erzeugten Steuerdaten die Majoritätsentscheidung erfüllen, und das eine als Hauptsystem auszuwählende Computersteuerung anzeigt,
die Steuereinheit in der Diagnosephase die Majoritätsentscheidung anhand von Daten, die als die Majoritätsentscheidung nicht erfüllend vorgegeben sind, durchführt und ein Hauptsystem-Auswahlsignal erzeugt, das darstellt, ob die Majoritätsentscheidung tatsächlich nicht erfüllt ist, und das ein auszuwählendes Hauptsystem anzeigt, und
die Einrichtung zur Ausgabe der Steuerdaten eine externe Diagnoseeinrichtung (11, 21, 31) beinhaltet, um die Hauptsystem-Auswahlsignale zu empfangen, anhand der empfangenen Hauptsystem-Auswahlsignale eine Majoritätsentscheidung durchzuführen und die Steuerdaten der Steuereinheit der eigenen Computersteuerung an das Objekt auszugeben, wenn die eigene Computersteuerung das Hauptsystem darstellt, andernfalls die Computersteuerung jedoch von dem Objekt zu trennen.

2. Vorrichtung nach Anspruch 1, wobei den Steuereinheiten (10, 20, 30) vorbestimmte Prioritäten zugewiesen sind und die Einrichtungen (11, 21, 31, 14, 24, 34) zur Ausgabe von Steuerdaten diejenige Computersteuerung (1, 2, 3) als Hauptsystem auswählen, die unter den mittels Majoritätsentscheidung gewählten Computersteuerungen die höchste Priorität hat.

3. Steuervorrichtung nach Anspruch 1 oder 2, wobei die Einrichtung (11, 14, 24, 31, 34) zur Ausgabe von Steuerdaten eine Schalteinrichtung (14, 24, 34) zur Verbindung oder Trennung der entsprechenden Steuereinheit (10, 20, 30) mit oder von dem zu steuernden Objekt (4) beinhaltet, die externe Diagnoseeinrichtung (11, 21, 31) die Schalteinrichtung der als Hauptsystem ausgewählten Computersteuerung (1, 2, 3) schließt, um eine Steuerausgabe an das zu steuernde Objekt (4) anzulegen, und die Steuereinheiten (10, 20, 30) aller Computersteuerungen (1, 2, 3) die Steuerausgaben der genannten Einrichtungen (11, 14, 21, 24, 31, 34) zur Ausgabe von Steuerdaten empfangen und ihre Steuerung unterbrechen, wenn sie in der Steuerausgabe eine Abnormalität feststellen.

## Revendications

1. Dispositif de commande de multiplexage à couplage lâche incluant une pluralité de circuits de commande d'ordinateur (1, 2, 3), comportant chacun :
une unité de commande (10, 20, 30) destinée à générer des données de commande pour commander un objet (4), recevoir les données de commande générées par une unité de commande d'un circuit de commande d'ordinateur différent, et prendre une décision à la majorité sur les données de commande, et
des moyens (11, 21, 31, 14, 24, 34) pour délivrer audit objet les données de commande de l'unité de commande d'un circuit de commande d'ordinateur sélectionné en tant que système principal sur la base de ladite décision prise à la majorité,
caractérisé en ce que
ladite unité de commande (10, 20, 30) est adaptée pour fonctionner pendant une phase de commande et pendant une phase de diagnostic, les deux phases étant effectuées au cours de chaque cycle de commande,
pendant ladite phase de commande, ladite unité de commande prend ladite décision à la majorité sur lesdites données de commande et génère un signal de sélection de système principal qui reflète si les données de commande générées par elle-même satisfont à la décision prise à la majorité et indique un circuit de commande d'ordinateur à sélectionner en tant que système principal,
pendant ladite phase de diagnostic, ladite unité de commande prend ladite décision à la majorité sur des données dont il a été prédéterminé qu'elles ne satisferaient pas à la décision à la majorité et génère un signal de sélection de système principal qui reflète si la décision prise à la majorité n'est en effet pas satisfaite et indique un système principal à sélectionner, et
lesdits moyens pour délivrer lesdites données de commande incluent un dispositif de diagnostic externe (11, 21, 31) pour recevoir lesdits signaux de sélection de système principal et prendre une décision à la majorité sur les signaux de sélection de système principal reçus et délivrer les données de commande de l'unité de commande de leur propre circuit de commande d'ordinateur à l'objet si leur propre circuit de commande d'ordinateur est le système principal et, dans le cas contraire, déconnecter le circuit de commande d'ordinateur de l'objet.

2. Dispositif selon la revendication 1, dans lequel lesdites unités de commande (10, 20, 30) ont des priorités prédéterminées qui leurs sont assignées et lesdits moyens (11, 21, 31, 14, 24, 34) pour délivrer des données de commande sélectionnent en tant que système principal le circuit de commande d'ordinateur (1, 2, 3) qui a le niveau de priorité le plus élevé parmi les circuits de commande d'ordinateur, sélectionné par décision à la majorité.

3. Dispositif de commande selon la revendication 1 ou 2, dans lequel lesdits moyens (11, 14, 21, 24, 31, 34) pour délivrer des données de commande incluent des moyens de commutation (14, 24, 34) pour connecter ou déconnecter l'unité de commande (10, 20, 30) respective audit ou dudit objet commandé (4), ledit dispositif de diagnostic externe (11, 21, 31) ferme les moyens de commutation du circuit de commande d'ordinateur (1, 2, 3) sélectionné en tant que susdit système principal afin de délivrer une sortie de commande audit objet commandé (4) et les unités de commande (10, 20, 30) de tous les circuits de commande d'ordinateur (1, 2, 3) reçoivent les sorties de commande desdits moyens (11, 14, 21, 24, 31, 34) pour délivrer des données de commande et interrompent leur commande lorsqu'ils détectent une anomalie dans la sortie de commande.
